# EUROPEAN PATENT APPLICATION

(11) **EP 3 240 350 A1**
(43) Date of publication of application: **01.11.2017**
(21) Application number: 17168147.1
(22) Date of filing: 26.04.2017
(51) Int. Cl.: H04W 72/12, H04W 52/36

(54) **METHOD AND USER EQUIPMENT FOR TRANSMITTING DATA VOLUME INFORMATION**

(30) Priority: 28.04.2016 US 201662328626 P
(71) Applicant: LG Electronics, Inc., Yeongdeungpo-Gu Seoul 07336 (KR)
(72) Inventor: LEE, Sunyoung, 06772 Seoul (KR); YI, Seungjune, 06772 Seoul (KR); HAN, Sangwook, 06772 Seoul (KR)
(74) Representative: Frenkel, Matthias Alexander

(57) **Abstract**

A user equipment according to the present invention transmits a medium access control (MAC) protocol data unit (PDU), containing the RRC message and a data volume and power headroom (DV-PH) report but no BSR, using a uplink grant received in a random access response.

## Description

### [Technical Field]

The present invention relates to a wireless communication system, and more particularly, to a method and apparatus for transmitting data volume information.

### [Background Art]

As an example of a mobile communication system to which the present invention is applicable, a 3rd Generation Partnership Project Long Term Evolution (hereinafter, referred to as LTE) communication system is described in brief.

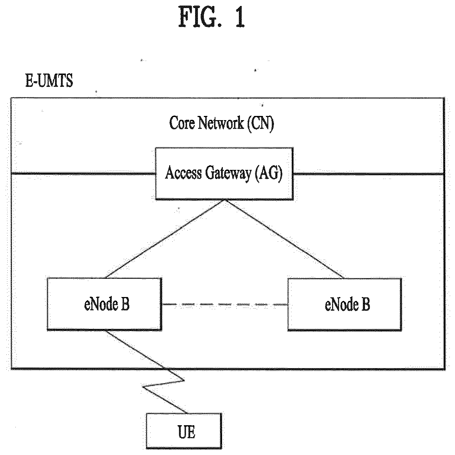

FIG. 1 is a view schematically illustrating a network structure of an E-UMTS as an exemplary radio communication system. An Evolved Universal Mobile Telecommunications System (E-UMTS) is an advanced version of a conventional Universal Mobile Telecommunications System (UMTS) and basic standardization thereof is currently underway in the 3GPP. E-UMTS may be generally referred to as a Long Term Evolution (LTE) system. For details of the technical specifications of the UMTS and E-UMTS, reference can be made to Release 7 and Release 8 of "3rd Generation Partnership Project; Technical Specification Group Radio Access Network".

Referring to FIG. 1, the E-UMTS includes a User Equipment (UE), eNode Bs (eNBs), and an Access Gateway (AG) which is located at an end of the network (E-UTRAN) and connected to an external network. The eNBs may simultaneously transmit multiple data streams for a broadcast service, a multicast service, and/or a unicast service.

One or more cells may exist per eNB. The cell is set to operate in one of bandwidths such as 1.25, 2.5, 5, 10, 15, and 20 MHz and provides a downlink (DL) or uplink (UL) transmission service to a plurality of UEs in the bandwidth. Different cells may be set to provide different bandwidths. The eNB controls data transmission or reception to and from a plurality of UEs. The eNB transmits DL scheduling information of DL data to a corresponding UE so as to inform the UE of a time/frequency domain in which the DL data is supposed to be transmitted, coding, a data size, and hybrid automatic repeat and request (HARQ)-related information. In addition, the eNB transmits UL scheduling information of UL data to a corresponding UE so as to inform the UE of a time/frequency domain which may be used by the UE, coding, a data size, and HARQ-related information. An interface for transmitting user traffic or control traffic may be used between eNBs. A core network (CN) may include the AG and a network node or the like for user registration of UEs. The AG manages the mobility of a UE on a tracking area (TA) basis. One TA includes a plurality of cells.

Although wireless communication technology has been developed to LTE based on wideband code division multiple access (WCDMA), the demands and expectations of users and service providers are on the rise. In addition, considering other radio access technologies under development, new technological evolution is required to secure high competitiveness in the future. Decrease in cost per bit, increase in service availability, flexible use of frequency bands, a simplified structure, an open interface, appropriate power consumption of UEs, and the like are required.

As more and more communication devices demand larger communication capacity, there is a need for improved mobile broadband communication compared to existing RAT. Also, massive machine type communication (MTC), which provides various services by connecting many devices and objects, is one of the major issues to be considered in the next generation communication. In addition, a communication system design considering a service/UE sensitive to reliability and latency is being discussed. The introduction of next-generation RAT, which takes into account such advanced mobile broadband communication, massive MTC (mMCT), and ultra-reliable and low latency communication (URLLC), is being discussed.

### [Disclosure]

### [Technical Problem]

Due to introduction of new radio communication technology, the number of user equipments (UEs) to which a BS should provide a service in a prescribed resource region increases and the amount of data and control information that the BS should transmit to the UEs increases. Since the amount of resources available to the BS for communication with the UE(s) is limited, a new method in which the BS efficiently receives/transmits uplink/downlink data and/or uplink/downlink control information using the limited radio resources is needed.

With development of technologies, overcoming delay or latency has become an important challenge. Applications whose performance critically depends on delay/latency are increasing. Accordingly, a method to reduce delay/latency compared to the legacy system is demanded.

Also, with development of smart devices, a new scheme for efficiently transmitting/receiving a small amount of data or efficiently transmitting / receiving data occurring at a low frequency is required.

The technical objects that can be achieved through the present invention are not limited to what has been particularly described hereinabove and other technical objects not described herein will be more clearly understood by persons skilled in the art from the following detailed description.

### [Technical Solution]

A user equipment according to the present invention transmits a medium access control (MAC) protocol data unit (PDU), containing the RRC message and a data volume and power headroom (DV-PH) report but no BSR, using a uplink grant received in a random access response.

In an aspect of the present invention, provided herein is a method of transmitting, by a user equipment, data volume information. The method comprises: transmitting a random access preamble; receiving a random access response containing an uplink grant in response to the random access preamble; and transmitting a medium access control (MAC) protocol data unit (PDU) including a radio resource control (RRC) message using the uplink grant. The MAC PDU includes a data volume and power headroom (DV-PH) report and no buffer status report (BSR). The DV-PH report is used to inform the amount of data for a radio bearer which is suspended or not yet established.

In another aspect of the present invention, provided herein is a user equipment for transmitting data volume information. The user equipment comprises a radio frequency (RF) unit, and a processor configured to control the RF unit. The processor: controls the RF unit to transmit a random access preamble; controls the RF unit to receive a random access response containing an uplink grant in response to the random access preamble; and control the RF unit to transmit a medium access control (MAC) protocol data unit (PDU) including a radio resource control (RRC) message using the uplink grant. The MAC PDU includes a data volume and power headroom (DV-PH) report and no buffer status report (BSR). The DV-PH report is used to inform the amount of data for a radio bearer which is suspended or not yet established.

In each aspect of the present invention, the random access preamble may be transmitted when there is an RRC message to be sent on a common control channel (CCCH).

In each aspect of the present invention, the user equipment may trigger a BSR when there is an RRC message to be sent on a CCCH. The user equipment may cancel the triggered BSR when the DV-PH report is included in the MAC PDU.

In each aspect of the present invention, the RRC message may be an RRC connection resume request message.

In each aspect of the present invention, the RRC message may be transmitted through a signaling radio bearer 0 (SRB0).

In each aspect of the present invention, the RRC message may be contained in a CCCH service data unit (SDU) included in the MAC PDU.

In each aspect of the present invention, the user equipment may be a narrowband internet of things (NB-IoT) user equipment.

In each aspect of the present invention, the DV-PH report may include information identifying the total amount of data available across all logical channels and of data yet associated with a logical channel after all MAC PDUs for a transmission time interval (TTI) have been established.

The above technical solutions are merely some parts of the embodiments of the present invention and various embodiments into which the technical features of the present invention are incorporated can be derived and understood by persons skilled in the art from the following detailed description of the present invention.

### [Advantageous Effects]

According to the present invention, radio communication signals can be efficiently transmitted/received. Therefore, overall throughput of a radio communication system can be improved.

According to one embodiment of the present invention, a low cost/complexity UE can perform communication with a base station (BS) at low cost while maintaining compatibility with a legacy system.

According to one embodiment of the present invention, the UE can be implemented at low cost/complexity.

According to one embodiment of the present invention, the UE and the BS can perform communication with each other at a narrowband.

According to an embodiment of the present invention, delay/latency occurring during communication between a user equipment and a BS may be reduce.

Also, it is possible to efficiently transmit/receive a small amount of data for smart devices, or efficiently transmit/receive data occurring at a low frequency.

According to an embodiment of the present invention, a small amount of data may be efficiently transmitted/received.

It will be appreciated by persons skilled in the art that that the effects that can be achieved through the present invention are not limited to what has been particularly described hereinabove and other advantages of the present invention will be more clearly understood from the following detailed description.

### [Description of Drawings]

The accompanying drawings, which are included to provide a further understanding of the invention, illustrate embodiments of the invention and together with the description serve to explain the principle of the invention.
FIG. 1 is a view schematically illustrating a network structure of an E-UMTS as an exemplary radio communication system.
FIG. 2 is a block diagram illustrating network structure of an evolved universal mobile telecommunication system (E-UMTS).
FIG. 3 is a block diagram depicting architecture of a typical E-UTRAN and a typical EPC.
FIG. 4 is a diagram showing a control plane and a user plane of a radio interface protocol between a UE and an E-UTRAN based on a 3GPP radio access network standard.
FIG. 5 is a view showing an example of a physical channel structure used in an E-UMTS system.
FIG. 6 is a diagram for MAC structure overview in a UE side.
FIG. 7 is a diagram for MAC PDU consisting of MAC header, MAC control elements, MAC SDUs and padding.
FIG. 8 illustrates the Data Volume and Power Headroom Report MAC control element (DV-PH MAC CE).
FIG. 9 is a block diagram illustrating elements of a transmitting device 100 and a receiving device 200 for implementing the present invention.
FIG. 10 illustrates a method for informing a network of the amount of data available for uplink transmission according to the present invention.

### [Mode for Invention]

Reference will now be made in detail to the exemplary embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the invention. The following detailed description includes specific details in order to provide a thorough understanding of the present invention. However, it will be apparent to those skilled in the art that the present invention may be practiced without such specific details.

In some instances, known structures and devices are omitted or are shown in block diagram form, focusing on important features of the structures and devices, so as not to obscure the concept of the present invention. The same reference numbers will be used throughout this specification to refer to the same or like parts.

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE. For convenience of description, it is assumed that the present invention is applied to 3GPP LTE/LTE-A. However, the technical features of the present invention are not limited thereto. For example, although the following detailed description is given based on a mobile communication system corresponding to a 3GPP LTE/LTE-A system, aspects of the present invention that are not specific to 3GPP LTE/LTE-A are applicable to other mobile communication systems.

For example, the present invention is applicable to contention based communication such as Wi-Fi as well as non-contention based communication as in the 3GPP LTE/LTE-A system in which an eNB allocates a DL/UL time/frequency resource to a UE and the UE receives a DL signal and transmits a UL signal according to resource allocation of the eNB. In a non-contention based communication scheme, an access point (AP) or a control node for controlling the AP allocates a resource for communication between the UE and the AP, whereas, in a contention based communication scheme, a communication resource is occupied through contention between UEs which desire to access the AP. The contention based communication scheme will now be described in brief. One type of the contention based communication scheme is carrier sense multiple access (CSMA). CSMA refers to a probabilistic media access control (MAC) protocol for confirming, before a node or a communication device transmits traffic on a shared transmission medium (also called a shared channel) such as a frequency band, that there is no other traffic on the same shared transmission medium. In CSMA, a transmitting device determines whether another transmission is being performed before attempting to transmit traffic to a receiving device. In other words, the transmitting device attempts to detect presence of a carrier from another transmitting device before attempting to perform transmission. Upon sensing the carrier, the transmitting device waits for another transmission device which is performing transmission to finish transmission, before performing transmission thereof. Consequently, CSMA can be a communication scheme based on the principle of "sense before transmit" or "listen before talk". A scheme for avoiding collision between transmitting devices in the contention based communication system using CSMA includes carrier sense multiple access with collision detection (CSMA/CD) and/or carrier sense multiple access with collision avoidance (CSMA/CA). CSMA/CD is a collision detection scheme in a wired local area network (LAN) environment. In CSMA/CD, a personal computer (PC) or a server which desires to perform communication in an Ethernet environment first confirms whether communication occurs on a network and, if another device carries data on the network, the PC or the server waits and then transmits data. That is, when two or more users (e.g. PCs, UEs, etc.) simultaneously transmit data, collision occurs between simultaneous transmission and CSMA/CD is a scheme for flexibly transmitting data by monitoring collision. A transmitting device using CSMA/CD adjusts data transmission thereof by sensing data transmission performed by another device using a specific rule. CSMA/CA is a MAC protocol specified in IEEE 802.11 standards. A wireless LAN (WLAN) system conforming to IEEE 802.11 standards does not use CSMA/CD which has been used in IEEE 802.3 standards and uses CA, i.e. a collision avoidance scheme. Transmission devices always sense carrier of a network and, if the network is empty, the transmission devices wait for determined time according to locations thereof registered in a list and then transmit data. Various methods are used to determine priority of the transmission devices in the list and to reconfigure priority. In a system according to some versions of IEEE 802.11 standards, collision may occur and, in this case, a collision sensing procedure is performed. A transmission device using CSMA/CA avoids collision between data transmission thereof and data transmission of another transmission device using a specific rule.

In the present invention, the term "assume" may mean that a subject to transmit a channel transmits the channel in accordance with the corresponding "assumption." This may also mean that a subject to receive the channel receives or decodes the channel in a form conforming to the "assumption," on the assumption that the channel has been transmitted according to the "assumption."

In the present invention, a user equipment (UE) may be a fixed or mobile device. Examples of the UE include various devices that transmit and receive user data and/or various kinds of control information to and from a base station (BS). The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc. In addition, in the present invention, a BS generally refers to a fixed station that performs communication with a UE and/or another BS, and exchanges various kinds of data and control information with the UE and another BS. The BS may be referred to as an advanced base station (ABS), a node-B (NB), an evolved node-B (eNB), a base transceiver system (BTS), an access point (AP), a processing server (PS), etc. In describing the present invention, a BS will be referred to as an eNB.

In the present invention, a node refers to a fixed point capable of transmitting/receiving a radio signal through communication with a UE. Various types of eNBs may be used as nodes irrespective of the terms thereof. For example, a BS, a node B (NB), an e-node B (eNB), a pico-cell eNB (PeNB), a home eNB (HeNB), a relay, a repeater, etc. may be a node. In addition, the node may not be an eNB. For example, the node may be a radio remote head (RRH) or a radio remote unit (RRU). The RRH or RRU generally has a lower power level than a power level of an eNB. Since the RRH or RRU (hereinafter, RRH/RRU) is generally connected to the eNB through a dedicated line such as an optical cable, cooperative communication between RRH/RRU and the eNB can be smoothly performed in comparison with cooperative communication between eNBs connected by a radio line. At least one antenna is installed per node. The antenna may mean a physical antenna or mean an antenna port or a virtual antenna.

In the present invention, a cell refers to a prescribed geographical area to which one or more nodes provide a communication service. Accordingly, in the present invention, communicating with a specific cell may mean communicating with an eNB or a node which provides a communication service to the specific cell. In addition, a DL/UL signal of a specific cell refers to a DL/UL signal from/to an eNB or a node which provides a communication service to the specific cell. A node providing UL/DL communication services to a UE is called a serving node and a cell to which UL/DL communication services are provided by the serving node is especially called a serving cell.

Meanwhile, a 3GPP LTE/LTE-A system uses the concept of a cell in order to manage radio resources and a cell associated with the radio resources is distinguished from a cell of a geographic region.

A "cell" of a geographic region may be understood as coverage within which a node can provide service using a carrier and a "cell" of a radio resource is associated with bandwidth (BW) which is a frequency range configured by the carrier. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of a radio resource used by the node. Accordingly, the term "cell" may be used to indicate service coverage of the node sometimes, a radio resource at other times, or a range that a signal using a radio resource can reach with valid strength at other times.

Meanwhile, the 3GPP LTE-A standard uses the concept of a cell to manage radio resources. The "cell" associated with the radio resources is defined by combination of downlink resources and uplink resources, that is, combination of DL component carrier (CC) and UL CC. The cell may be configured by downlink resources only, or may be configured by downlink resources and uplink resources. If carrier aggregation is supported, linkage between a carrier frequency of the downlink resources (or DL CC) and a carrier frequency of the uplink resources (or UL CC) may be indicated by system information. For example, combination of the DL resources and the UL resources may be indicated by linkage of system information block type 2 (SIB2). In this case, the carrier frequency means a center frequency of each cell or CC. A cell operating on a primary frequency may be referred to as a primary cell (Pcell) or PCC, and a cell operating on a secondary frequency may be referred to as a secondary cell (Scell) or SCC. The carrier corresponding to the Pcell on downlink will be referred to as a downlink primary CC (DL PCC), and the carrier corresponding to the Pcell on uplink will be referred to as an uplink primary CC (UL PCC). A Scell means a cell that may be configured after completion of radio resource control (RRC) connection establishment and used to provide additional radio resources. The Scell may form a set of serving cells for the UE together with the Pcell in accordance with capabilities of the UE. The carrier corresponding to the Scell on the downlink will be referred to as downlink secondary CC (DL SCC), and the carrier corresponding to the Scell on the uplink will be referred to as uplink secondary CC (UL SCC). Although the UE is in RRC-CONNECTED state, if it is not configured by carrier aggregation or does not support carrier aggregation, a single serving cell configured by the Pcell only exists.

For terms and technologies which are not specifically described among the terms of and technologies employed in this specification, 3GPP LTE/LTE-A standard documents, for example, 3GPP TS 36.211, 3GPP TS 36.212, 3GPP TS 36.213, 3GPP TS 36.321, 3GPP TS 36.322, 3GPP TS 36.323 and 3GPP TS 36.331 may be referenced.

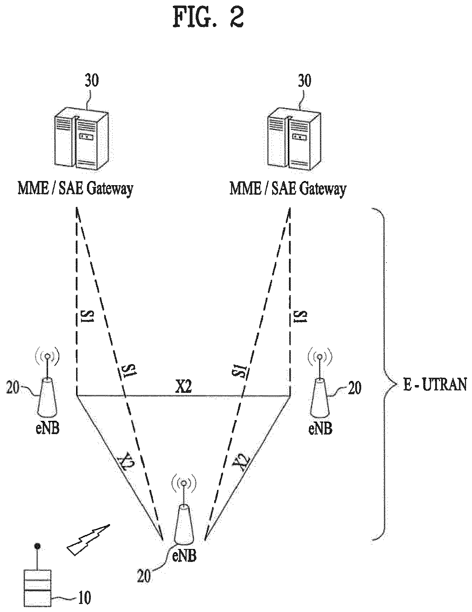

FIG. 2 is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 2, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNB 20 to UE 10, and "uplink" refers to communication from the UE to an eNB.

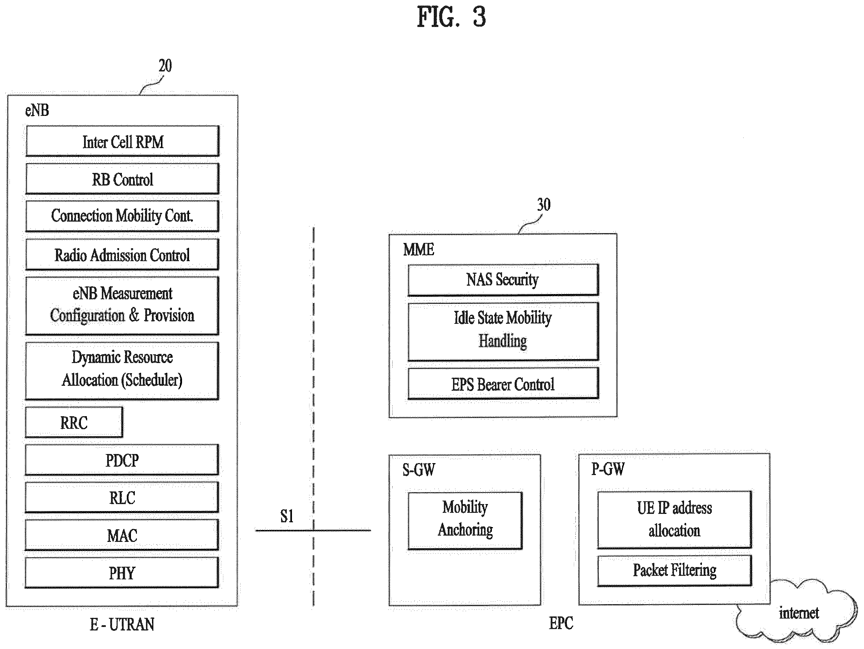

FIG. 3 is a block diagram depicting architecture of a typical E-UTRAN and a typical EPC.

As illustrated in FIG. 3, an eNB 20 provides end points of a user plane and a control plane to the UE 10. MME/SAE gateway 30 provides an end point of a session and mobility management function for UE 10. The eNB and MME/SAE gateway may be connected via an S1 interface.

The eNB 20 is generally a fixed station that communicates with a UE 10, and may also be referred to as a base station (BS) or an access point. One eNB 20 may be deployed per cell. An interface for transmitting user traffic or control traffic may be used between eNBs 20.

The MME provides various functions including NAS signaling to eNBs 20, NAS signaling security, AS Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, roaming, authentication, bearer management functions including dedicated bearer establishment, support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNB 20 and gateway 30 via the S1 interface. The eNBs 20 may be connected to each other via an X2 interface and neighboring eNBs may have a meshed network structure that has the X2 interface.

As illustrated, eNB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

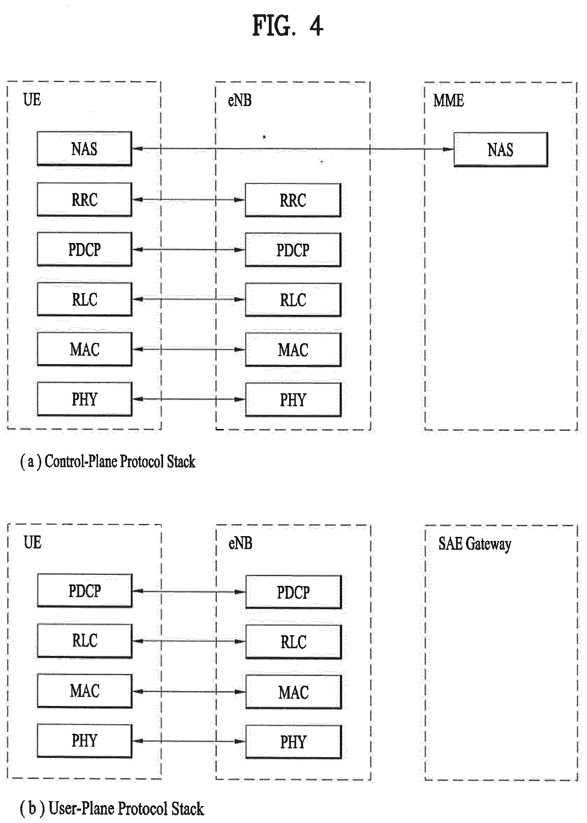

FIG. 4 is a diagram showing a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

A physical (PHY) layer of a first layer provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

The MAC layer of a second layer provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

A radio resource control (RRC) layer located at the bottom of a third layer is defined only in the control plane. The RRC layer controls logical channels, transport channels, and physical channels in relation to configuration, reconfiguration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other.

Radio bearers are roughly classified into (user) data radio bearers (DRBs) and signaling radio bearers (SRBs). SRBs are definedd as radio beares (RBs) that are used only for the transmission of RRC and NAS messages. For example, the following SRBs are defined:
- SRB0 is for RRC messages using the common control channel (CCCH) logical channel;
- SRB1 is for RRC messages (which may include a piggybacked NAS message) as well as for NAS messages prior to the establishment of SRB2, using DCCH logical channel;
- SRB2 is for RRC messages which include logged measurement information as well as for NAS messages, using DCCH logical channel. SRB2 has a lower-priority than SRB1 and is always configured by E-UTRAN after security activation.

Once security is activated, all RRC messages on SRB1 and SRB2, including those containing NAS or non-3GPP messages, are integrity protected and ciphered by PDCP. NAS independently applies integrity protection and ciphering to the NAS messages.

For NB-IoT, an SRB1bis is further defined recently. SRB1bis is for RRC messages (which may include a piggybacked NAS message) as well as for NAS messages prior to the activation of security, using DCCH logical channel. In NB-IoT, during the RRC connection establishment procedure, SRB1bis is established implicitly with SRB1. SRB1bis uses the logical channel identity, with the same configuration as SRB1 but no PDCP entity. SRB1bis is used until security is activated. The RRC messages to activate security (command and successful response) are sent over SRB1 being integrity protected and ciphering is started after completion of the procedure. Once security is activated, new RRC messages shall be transmitted using SRB1. A NB-IoT UE that only supports the control plane CIoT EPS optimization explained later only establishes SRB1bis. A NB-IoT UE only supports 0, 1 or 2 DRBs, depending on its capability. A NB-IoT UE that only supports the control plane CIoT EPS optimization does not need to support any DRBs and associated procedures.

One cell of the eNB is set to operate in one of bandwidths such as 1.25, 2.5, 5, 10, 15, and 20 MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

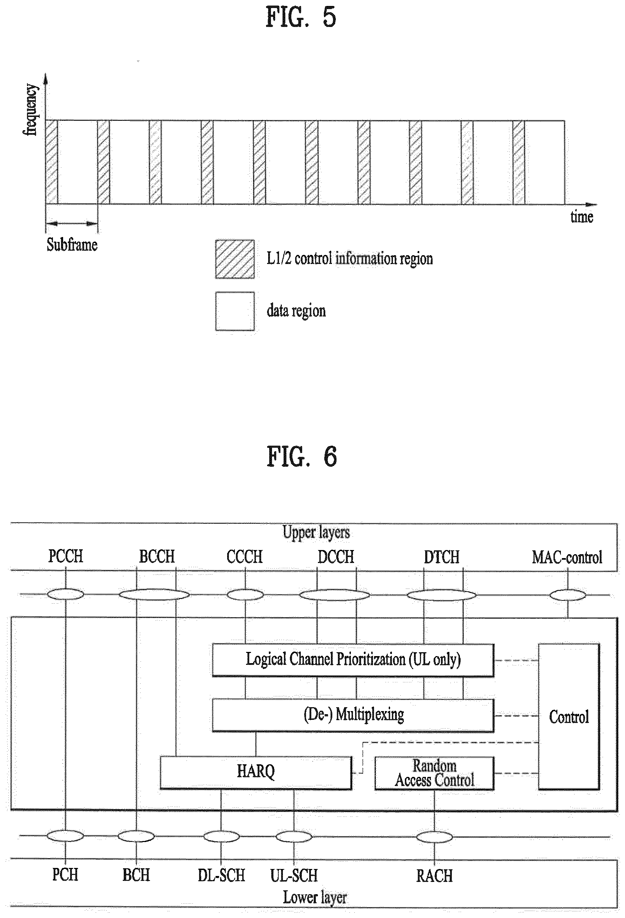

FIG. 5 is a view showing an example of a physical channel structure used in an E-UMTS system. A physical channel includes several subframes on a time axis and several subcarriers on a frequency axis. Here, one subframe includes a plurality of symbols on the time axis. One subframe includes a plurality of resource blocks and one resource block includes a plurality of symbols and a plurality of subcarriers. In addition, each subframe may use certain subcarriers of certain symbols (e.g., a first symbol) of a subframe for a physical downlink control channel (PDCCH), that is, an L1/L2 control channel. In FIG. 5, an L1/L2 control information transmission area (PDCCH) and a data area (PDSCH) are shown. In one embodiment, a radio frame of 10ms is used and one radio frame includes 10 subframes. In addition, one subframe includes two consecutive slots. The length of one slot may be 0.5ms. In addition, one subframe includes a plurality of OFDM symbols and a portion (e.g., a first symbol) of the plurality of OFDM symbols may be used for transmitting the L1/L2 control information.

A radio frame may have different configurations according to duplex modes. In FDD mode for example, since DL transmission and UL transmission are discriminated according to frequency, a radio frame for a specific frequency band operating on a carrier frequency includes either DL subframes or UL subframes. In TDD mode, since DL transmission and UL transmission are discriminated according to time, a radio frame for a specific frequency band operating on a carrier frequency includes both DL subframes and UL subframes.

A time interval in which one subframe is transmitted is defined as a transmission time interval (TTI). Time resources may be distinguished by a radio frame number (or radio frame index), a subframe number (or subframe index), a slot number (or slot index), and the like. TTI refers to an interval during which data may be scheduled. For example, in the current LTE/LTE-A system, a opportunity of transmission of an UL grant or a DL grant is present every 1 ms, and the UL/DL grant opportunity does not exists several times in less than 1 ms. Therefore, the TTI in the current LTE/LTE-A system is 1ms.

A base station and a UE mostly transmit/receive data via a PDSCH, which is a physical channel, using a DL-SCH which is a transmission channel, except a certain control signal or certain service data. Information indicating to which UE (one or a plurality of UEs) PDSCH data is transmitted and how the UE receive and decode PDSCH data is transmitted in a state of being included in the PDCCH.

For example, in one embodiment, a certain PDCCH is CRC-masked with a radio network temporary identity (RNTI) "A" and information about data is transmitted using a radio resource "B" (e.g., a frequency location) and transmission format information "C" (e.g., a transmission block size, modulation, coding information or the like) via a certain subframe. Then, one or more UEs located in a cell monitor the PDCCH using its RNTI information. And, a specific UE with RNTI "A" reads the PDCCH and then receive the PDSCH indicated by B and C in the PDCCH information.

FIG. 6 is a diagram for MAC structure overview in a UE side.

The MAC layer supports the following functions: mapping between logical channels and transport channels; multiplexing of MAC SDUs from one or different logical channels onto transport blocks (TB) to be delivered to the physical layer on transport channels; demultiplexing of MAC SDUs from one or different logical channels from transport blocks (TB) delivered from the physical layer on transport channels; scheduling information reporting (e.g. scheduling request, buffer status reporting); error correction through HARQ; priority handling between UEs by means of dynamic scheduling; priority handling between logical channels of one MAC entity; Logical Channel Prioritization (LCP); transport format selection; and radio resource selection for SL.

The MAC provides services to the RLC in the form of logical channels. A logical channel is defined by the type of information it carries and is generally classified as a control channel, used for transmission of control and configuration information necessary for operating an LTE system, or as a traffic channel, used for the user data. The set of logical channel types specified for LTE includes broadcast control channel (BCCH), paging control channel (PCCH), common control channel (CCCH), dedicated control channel (DCCH), multicast control channel (MCCH), dedicated traffic channel (DTCH), multicast traffic channel (MTCH).

From the physical layer, the MAC layer uses services in the form of transport channels. A transport channel is defined by how and with what characteristics the information is transmitted over the radio interface. Data on a transport channel is organized into transport blocks. In each transmission time interval (TTI), at most one transport block of dynamic size is transmitted over the radio interface to/from a terminal in the absence of spatial multiplexing. In the case of spatial multiplexing (MIMO), there can be up to two transport blocks per TTI.

Associated with each transport block is a transport format (TF), specifying how the transport block is to be transmitted over the radio interface. The transport format includes information about the transport-block size, the modulation-and-coding scheme, and the antenna mapping. By varying the transport format, the MAC layer can thus realize different data rates. Rate control is therefore also known as transport-format selection.

To support priority handling, multiple logical channels, where each logical channel has its own RLC entity, can be multiplexed into one transport channel by the MAC layer. At the receiver, the MAC layer handles the corresponding demultiplexing and forwards the RLC PDUs to their respective RLC entity for in-sequence delivery and the other functions handled by the RLC. To support the demultiplexing at the receiver, a MAC is used. To each RLC PDU, there is an associated sub-header in the MAC header. The sub-header contains the identity of the logical channel (LCID) from which the RLC PDU originated and the length of the PDU in bytes. There is also a flag indicating whether this is the last sub-header or not. One or several RLC PDUs, together with the MAC header and, if necessary, padding to meet the scheduled transport-block size, form one transport block which is forwarded to the physical layer.

In addition to multiplexing of different logical channels, the MAC layer can also insert the so-called MAC control elements into the transport blocks to be transmitted over the transport channels. A MAC control element is used for inband control signaling-for example, timing-advance commands and random-access response. Control elements are identified with reserved values in the LCID field, where the LCID value indicates the type of control information.

Furthermore, the length field in the sub-header is removed for control elements with a fixed length.

The MAC multiplexing functionality is also responsible for handling of multiple component carriers in the case of carrier aggregation. The basic principle for carrier aggregation is independent processing of the component carriers in the physical layer, including control signaling, scheduling and hybrid-ARQ retransmissions, while carrier aggregation is invisible to RLC and PDCP. Carrier aggregation is therefore mainly seen in the MAC layer, where logical channels, including any MAC control elements, are multiplexed to form one (two in the case of spatial multiplexing) transport block(s) per component carrier with each component carrier having its own hybrid-ARQ entity.

The buffer status reporting procedure is used to provide the serving eNB with information about the amount of data available for transmission in the UL buffers associated with the MAC entity. A buffer status report (BSR) shall be triggered if any of the following events occur:
- UL data, for a logical channel which belongs to a logical channel group (LCG), becomes available for transmission in the RLC entity or in the PDCP entity (the definition of what data shall be considered as available for transmission is specified in 3GPP TS 36.322 and 3GPP TS 36.323 respectively) and either the data belongs to a logical channel with higher priority than the priorities of the logical channels which belong to any LCG and for which data is already available for transmission, or there is no data available for transmission for any of the logical channels which belong to a LCG, in which case the BSR is referred to as "Regular BSR";
- UL resources are allocated and number of padding bits is equal to or larger than the size of the Buffer Status Report MAC control element plus its subheader, in which case the BSR is referred below to as "Padding BSR";
- *retxBSR-Timer* expires and the MAC entity has data available for transmission for any of the logical channels which belong to a LCG, in which case the BSR is referred below to as "Regular BSR";
- *periodicBSR-Timer* expires*,* in which case the BSR is referred below to as "Periodic BSR".

If the Buffer Status reporting procedure determines that at least one BSR has been triggered and not cancelled:
> if the MAC entity has UL resources allocated for new transmission for this TTI:
   >> instruct the Multiplexing and Assembly procedure to generate the BSR MAC control element(s);
   >> start or restart *periodicBSR-Timer* except when all the generated BSRs are Truncated BSRs;
   >> start or restart *retxBSR-Timer.*
> else if a Regular BSR has been triggered and *logicalChannelSR-ProhibitTimer* is not running:
   >> if an uplink grant is not configured or the Regular BSR was not triggered due to data becoming available for transmission for a logical channel for which logical channel SR masking (*logicalChannelSR-Mask*) is setup by upper layers:
      >>> a Scheduling Request shall be triggered.

All triggered BSRs shall be cancelled in case the UL grant(s) in this subframe can accommodate all pending data available for transmission but is not sufficient to additionally accommodate the BSR MAC control element plus its subheader. All triggered BSRs shall be cancelled when a BSR is included in a MAC PDU for transmission.

All BSRs transmitted in a TTI always reflect the buffer status after all MAC PDUs have been built for this TTI. Each LCG shall report at the most one buffer status value per TTI and this value shall be reported in all BSRs reporting buffer status for this LCG.

The scheduling request (SR) procedure is used for requesting UL-SCH resources for new transmission. As long as one SR is pending, if no UL-SCH resources are available for a transmission in a corresponding TTI, the MAC entity initiate a random access procedure on the PCell and cancel all pending SRs. If the buffer status reporting procedure determines that at least one BSR has been triggered and not cancelled, if a Regular BSR has been triggered and *logicalChannelSR-ProhibitTimer* is not running, and if an uplink grant is not configured or the Regular BSR was not triggered due to data becoming available for transmission for a logical channel for which logical channel SR masking (*logica*/*Channe*/*SR-Mask*) is setup by upper layers, an SR is triggered. When an SR is triggered, it shall be considered as pending until it is cancelled. All pending SR(s) shall be cancelled and *sr-ProhibitTimer* shall be stopped when a MAC PDU is assembled and this PDU includes a BSR which contains buffer status up to (and including) the last event that triggered a BSR, or, if all pending SR(s) are triggered by Sidelink BSR, when a MAC PDU is assembled and this PDU includes a Sidelink BSR which contains buffer status up to (and including) the last event that triggered a Sidelink BSR, or, if all pending SR(s) are triggered by Sidelink BSR, when upper layers configure autonomous resource selection, or when the UL grant(s) can accommodate all pending data available for transmission.

The logical channel prioritization (LCP) procedure is applied when a new transmission is performed. RRC controls the scheduling of uplink data by signalling for each logical channel: *priority* where an increasing priority value indicates a lower priority level, *prioritisedBitRate* which sets the prioritized bit rate (PBR), *bucketSizeDuration* which sets the bucket size duration (BSD).

The MAC entity shall maintain a variable Bj for each logical channel j. Bj shall be initialized to zero when the related logical channel is established, and incremented by the product PBR*TTI duration for each TTI, where PBR is Prioritized Bit Rate of logical channel j. However, the value of Bj can never exceed the bucket size and if the value of Bj is larger than the bucket size of logical channel j, it shall be set to the bucket size. The bucket size of a logical channel is equal to PBR x BSD, where PBR and BSD are configured by upper layers.

The MAC entity shall perform the following LCP procedure when a new transmission is performed:
> The MAC entity shall allocate resources to the logical channels in the following steps:
   >> Step 1: All the logical channels with Bj > 0 are allocated resources in a decreasing priority order. If the PBR of a logical channel is set to "infinity", the MAC entity shall allocate resources for all the data that is available for transmission on the logical channel before meeting the PBR of the lower priority logical channel(s).;
   >> Step 2: the MAC entity shall decrement Bj by the total size of MAC SDUs served to logical channel j in Step 1 (NOTE: The value of Bj can be negative.).;
   >> Step 3: if any resources remain, all the logical channels are served in a strict decreasing priority order (regardless of the value of Bj) until either the data for that logical channel or the UL grant is exhausted, whichever comes first. Logical channels configured with equal priority should be served equally.
> The UE shall also follow the rules below during the scheduling procedures above:
   >> the UE should not segment an RLC SDU (or partially transmitted SDU or retransmitted RLC PDU) if the whole SDU (or partially transmitted SDU or retransmitted RLC PDU) fits into the remaining resources of the associated MAC entity;
   >> if the UE segments an RLC SDU from the logical channel, it shall maximize the size of the segment to fill the grant of the associated MAC entity as much as possible;
   >> the UE should maximize the transmission of data;
   >> if the MAC entity is given an UL grant size that is equal to or larger than 4 bytes while having data available for transmission, the MAC entity shall not transmit only padding BSR and/or padding (unless the UL grant size is less than 7 bytes and an AMD PDU segment needs to be transmitted).

The MAC entity shall not transmit data for a logical channel corresponding to a radio bearer that is suspended (the conditions for when a radio bearer is considered suspended are defined in 3GPP 36.331).

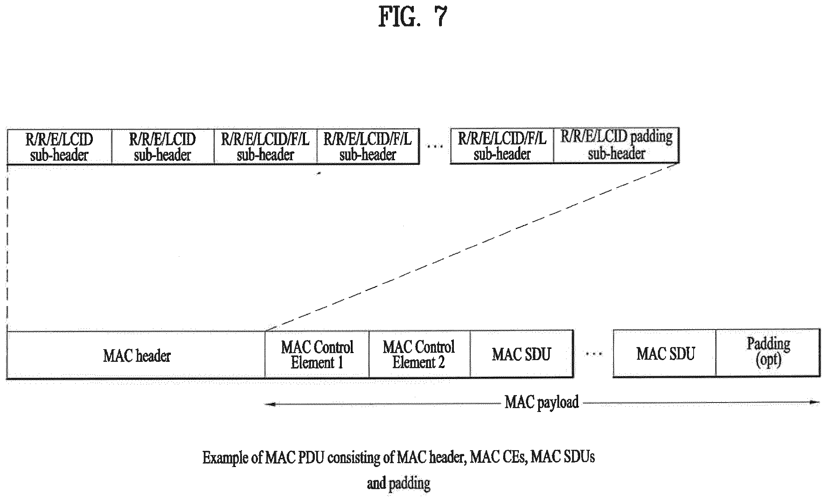

FIG. 7 is a diagram for MAC PDU consisting of MAC header, MAC control elements, MAC SDUs and padding. As shown in FIG. 7, a MAC PDU header consists of one or more MAC PDU subheaders, each subheader corresponds to either a MAC SDU, a MAC control element or padding.

Lots of devices are expected to be wirelessly connected to the internet of things (IoT). The IoT is the inter-networking of physical devices, vehicles (also referred to as "connected devices" and "smart devices"), buildings, and other items-embedded with electronics, software, sensors, actuators, and network connectivity that enable these objects to collect and exchange data. In other words, the IoT refers to a network of physical objects, machines, people, and other devices that enable connectivity and communication to exchange data for intelligent applications and services. The IoT allows objects to be sensed and controlled remotely through existing network infrastructures, providing opportunities for the direct integration between the physical and digital worlds, resulting in improved efficiency, accuracy and economic benefits. Particularly, in the present invention, the IoT using 3GPP technology is referred to as cellular IoT (CIoT). The CIoT that transmits/receives the IoT signal using a narrowband (e.g., a frequency band of about 200 kHz) is called an NB-IoT.

The CIoT can be used to monitor traffic transmitted over relatively long periods, e.g., from a few decades to a year (e.g., smoke alarm detection, power failure notification from smart meters, tamper notification, smart utility (gas/water/electricity) metering reports, software patches/updates, etc.) and ultra-low complexity, power limited and low data rate 'IoT' devices. The CIoT is a technology for solving the problem that a conventional attach procedure or service request procedure causes a power waste of a UE due to a large number of message exchanges. The CIoT minimizes the power consumption of the UE through the C-plane solution in which the MME processes the data or through the U-plane solution in which the UE and the eNB maintain the context even if the UE is in a state similar to the RRC idle state and utilize the context for the next connection.

As the name implies, the narrowBand internet of things (NB-IoT) is a wireless technology that provides IoT service using a narrowband frequency of about 200Khz. The NB-IoT uses a very small frequency compared to the conventional LTE technology using a frequency band of at least 1.25 MHz. Therefore, the NB-IoT minimizes processing power and minimizing power consumption on the UE side.

The CIoT network or technology mainly provides the optimized communication service for the IoT UE in terms of the core network, and the NB-IoT network or technology optimizes the radio interface of the existing LTE technology for IoT. Therefore, the NB-IoT radio technology and CIoT technology can be applied separately. That is, even if the NB-IoT radio technology is not used, it is possible to apply the CIoT technology through the conventional LTE radio network. This means that the CIoT technology can be applied to UEs that cannot use the NB-IoT radio technology, for example, UEs already released with LTE radio technology only. In addition, it means that conventional LTE radio technology based cells can support conventional LTE UEs such as smart phones while simultaneously supporting IoT UEs.

Conventionally, a UE in an EMM-idle mode shall make a connection with a network in order to transmit/receive data. An attach procedure or a service request procedure shall be successfully performed in order for a connection to be established between the UE and the network. As the conventional attach procedure or service request procedure causes the waste of the UE power due to a large number of message exchanges, it is not appropriate for the CIoT in which the optimized power consumption is essential for low complex/power and low data rate. In order to efficiently transport IoT data to IoT applications, two optimizations for CIoT in EPS, user plane CIoT EPS optimization and control plane CIoT EPS optimization are defined. The user plane CIoT EPS optimization and the control plane CIoT EPS optimization are also referred to as user plane (UP) and control plane (CP) solutions, respectively.

The control plane CIoT EPS optimization is a signaling optimization that enables efficient transport of user data (IP, non-IP, or SMS) on the control plane. In the control plane CIoT EPS optimization solution there is no data radio bearer set up, but instead data packets are sent on the signaling radio bearer. In other words, unlike the conventional data transmission in which a data radio bearer (DRB) is set up after an idle-to-connected mode transition and data is transmitted through the path of the UE-eNB-SGW, the control plane CIoT EPS Optimization is a method of sending data PDUs in NAS messages through SRB. Unlike the conventional S1 release procedure (see section 5.3.5 of 3GPP TS 23.401) that releases the S1-U interface, the S11-U interface is released through the S1 release procedure in the control plane CIoT EPS optimization.

In the legacy LTE system, there is only SRB0 before the UE receives *RRCConnectionSetup* message from the eNB after reception of Msg4 during a random access procedure. Accordingly, when the UE transmits an Msg3 including *RRCConnectionRequest* message, the buffer size is zero because there is only *RRCConnectionRequestmessage* in SRB0 and SRB1 is not established yet. Msg3 is a message transmitted on UL-SCH containing a C-RNTI MAC CE or CCCH SDU, submitted from upper layer and associated with the UE contention resolution identity, as part of a random access procedure. In the legacy LTE system, a UE in a RRC_IDLE shall perform the RRC connection establishment procedure including the following steps 1 to 5 in order to transmit a BSR and user data:
- Step 1: The UE transmits a random access preamble in Msg1;
- Step 2: The UE receives a random access response (RAR) in Msg2;
- Step 3. The UE transmits *RRCConnectionRequest* in Msg3 over SRB0.;
- Step 4. The UE receives *RRCConnectionSetup* in Msg4, enters RRC_CONNECTED, and establishes SRB1.;
- Step 5. The UE transmits an Msg5 including *RRCConnectionSetupComplete* message and a BSR over SRB1.;
- Step 7. The UE receives an UL grant.; and
- Step 8. The UE transmits data by using the received UL grant.

RRC connection establishment involves the establishment of SRB1. Accordingly, the UE cannot send the BSR earlier than the step 5. If the buffer size considering data of SRB1 can be reported earlier than the step 5, it would helpful for UE's battery saving because the UE can receive an appropriate UL grant at the step 4. To this end, recently, the Data Volume and Power Headroom Reporting was introduced. The Data Volume and Power Headroom reporting procedure is used to provide the serving eNB with information about the amount of data available for transmission in the UL buffers associated with the MAC entity, and to provide the serving eNB with information about the difference between the nominal UE maximum transmission power and the estimated transmission power for UL-SCH transmission for the serving cell. The Data Volume and Power Headroom reporting is done using the DV-PH MAC control element, which is sent in Msg3 together with a CCCH SDU.

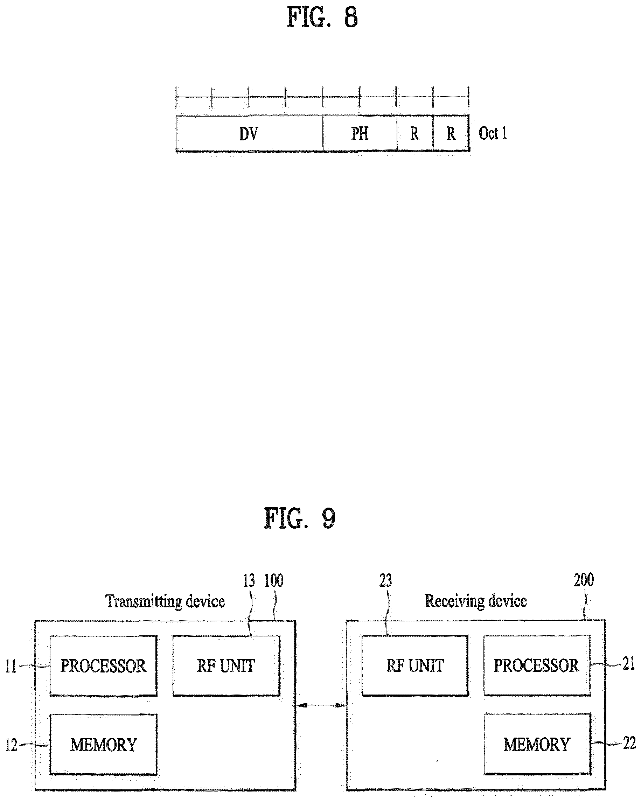

FIG. 8 illustrates the Data Volume and Power Headroom Report (DV-PH) MAC control element (CE).

The DV-PH MAC CE is identified by a MAC PDU subheader with the same LCID as is used for the CCCH MAC SDU.

It has a fixed size and consists of a single octet defined as follows:
- Data Volume (DV): The Data Volume field identifies the total amount of data available across all logical channels and of data not yet associated with a logical channel after all MAC PDUs for the TTI have been built. Accordingly, the value of the DV field is set considering only the amount of data remaining after all MAC PDUs for the TTI have been built. The amount of data is indicated in number of bytes. It shall include all data that is available for transmission in the RLC layer, in the PDCP layer, and in the RRC layer; the definition of what data shall be considered as available for transmission is specified in 3GPP TS 36.322, 3GPP TS 36.323 and 3GPP TS 36.331 respectively. The size of the RLC and MAC headers are not considered in the buffer size computation. The length of this field is 4 bits. The values taken by the Data Volume field are shown in Table 1;
- Power Headroom (PH): This field indicates the power headroom level. The length of the field is 2 bits. The reported PH and the corresponding power headroom levels are shown in Table 2 below;
- R: reserved bit, set to "0".

**Table 1**

| Index | Data Volume (DV) value [bytes] | Index | Data Volume (DV) value [bytes] |
|---|---|---|---|
| 0 | DV = 0 | 8 | 67 < DV <= 91 |
| 1 | 0 < DV <= 10 | 9 | 91 < DV <= 125 |
| 2 | 10 < DV <= 14 | 10 | 125 < DV <= 171 |
| 3 | 14 < DV <=19 | 11 | 171 < DV < = 234 |
| 4 | 19 < DV <= 26 | 12 | 234 < DV <= 321 |
| 5 | 26 < DV <= 36 | 13 | 321 < DV <= 440 |
| 6 | 36 < DV < = 49 | 14 | 440 < DV <= 603 |
| 7 | 49 < DV <= 67 | 15 | DV > 603 |

**Table 2**

| PH | Power Headroom Level |
|---|---|
| 0 | POWER_HEADROOM_0 |
| 1 | POWER_HEADROOM_1 |
| 2 | POWER_HEADROOM_2 |
| 3 | POWER_HEADROOM_3 |

NB-IoT UEs support at least the CP solution, and a UE applying/using the CP solution can transmit user data in *RRCConnectionSetupComplete* message over SRB1 before establishing DRB. Originally DV-PH reporting was considered for informing a serving eNB with information about the amount of data available for transmission for a radio bearer not yet established. Accordingly, the DV-PH reporting is applicable for a NB-IoT UE supporting a CP solution. Introduction of a user plane CIoT EPS optimization (i.e. UP solution) enables suspending a radio bearer. If the buffer size considering data of SRB1 can be reported before the SRB1 is resumed, it would helpful for UE's battery saving because an eNB can give a UE an appropriate UL grant, considering the amount of data to be transmitted over SRB1. Accordingly, the DV-PH report is also applicable for a radio bearer suspended. In other words, the DV-PH report is also applicable for a UE supporting/using the UP solution. In this case, a DV-PH MAC CE is sent via Msg3 including a CCCH SDU in order to inform the amount of data of a radio bearer which is suspended or not yet established.

The user plane CIoT EPS optimization (i.e., the UP solution) is intended to reduce signaling at the time of the idle-to-connected mode transition for data transmission, to release the RRC connection upon the connected-to-idle mode transition. Unlike the conventional idle mode in which the eNB clears the context of the UE, the user plane CIoT EPS optimization defines a connection suspend procedure for entering the idle state and a connection resume procedure for transition to the connected mode again from the idle state. The user plane CIoT EPS optimization requires the transmission of data through an existing data radio bearer (DRB), i.e., S1-U, but caches the access stratum (AS) parameters at the eNB even when the UE transitions to the idle mode from the connected mode.

The RRC connection established for the UP solution is characterized as follows:
- A RRC connection suspend procedure is used at RRC connection release, the eNB may request the UE to retain the UE AS context including UE capability in RRC_IDLE;
- A RRC connection resume procedure is used at transition from RRC_IDLE to RRC_CONNECTED where previously stored information in the UE as well as in the eNB is utilized to resume the RRC connection. In the message to resume, the UE provides a Resume ID to be used by the eNB to access the stored information required to resume the RRC connection;
- At suspend-resume, security is continued. Re-keying is not supported in RRC connection resume procedure. The short MAC-I is reused as the authentication token at RRC connection reestablishment procedure and RRC connection resume procedure by the UE.;
- Multiplexing of CCCH and DTCH in the transition from RRC_IDLE to RRC CONNECTED is not supported;
- For NB-IoT, a non-anchor carrier can be configured when an RRC connection is re-established, resumed or reconfigured additionally when an RRC connection is established.

The suspension of the RRC connection is initiated by E-UTRAN. When the RRC connection is suspended, the UE stores the UE AS context and the *resumeIdentity,* and transitions to RRC_IDLE state. The RRC message to suspend the RRC connection is integrity protected and ciphered. Suspension can only be performed when at least 1 DRB is successfully established. Upon leaving RRC_CONNECTED, if leaving RRC_CONNECTED was triggered by suspension of the RRC, the UE supporting the UP solution stores the full UE Context, including the ROHC state, along with the *resumeIdentity* provided by E-UTRAN; and indicates the suspension of the RRC connection to upper layers. When the RRC connection is suspended, PDCP and RLC are kept while MAC is reset.

The resumption of a suspended RRC connection is initiated by upper layers when the UE has a stored UE AS context, RRC connection resume is permitted by E-UTRAN and the UE needs to transit from RRC_IDLE state to RRC_CONNECTED state. When the RRC connection is resumed, RRC configures the UE according to the RRC connection resume procedure based on the stored UE AS context and any RRC configuration received from E-UTRAN. The RRC connection resume procedure reactivates security and re-establishes SRB(s) and DRB(s). The request to resume the RRC connection includes the *resumeIdentity.* In response to a request to resume the RRC connection, E-UTRAN may resume the suspended RRC connection, reject the request to resume and instruct the UE to either keep or discard the stored context, or setup a new RRC connection.

The RRC connection establishment procedure is to establish or resume an RRC connection. RRC connection establishment involves SRB1 establishment. The RRC connection establishment procedure is also used to transfer the initial NAS dedicated information/ message from the UE to E-UTRAN. The UE initiates the RRC connection establishment procedure when upper layers request establishment or resume of an RRC connection while the UE is in RRC_IDLE. If the UE is resuming an RRC connection, the UE submits the *RRCConnectionResumeRequest* message to lower layers for transmission. Upon initiation of RRC connection establishment procedure, the UE applies the default MAC configuration. Upon reception of *RRCConnectionResume* message from the network (e.g. eNB), the UE restores (reuses) the stored AS configuration, and performs radio resource configuration procedure which comprises establishing PDCP/RLC and reconfiguring MAC.

The *RRCConnectionRequest* message and the *RRCConnectionResumeRequest* message are UL-CCCH messages. The UL-CCCH messages are RRC messages that may be sent from the UE to the network (e.g. E-UTRAN) on the uplink CCCH logical channel. A random access procedure is initiated for a CCCH logical channel, and the data of the CCCH is transmitted in Msg3.

According to the current Layer 2 procedure, when a radio bearer (RB) is suspended due to the RRC connection suspension procedure, the UE keeps PDCP and RLC, and resets MAC. During suspension of an RB, when data becomes available in NAS layer, the UE stores the data in PDCP/RLC layer(s). If RRC initiates RRC Connection Resume procedure, a BSR is triggered at MAC due to *RRCConnectionResume* message. Then the MAC triggers SR and initiates a random access procedure for transmission of UL-SCH. The MAC transmits a CCCH SDU including *RRCConnecitonResumeRequest* message using a UL grant received via RAR. In the legacy RRC connection establishment procedure, when MAC transmits a CCCH SDU including *RRCConnectionRequest* message*,* MAC cancels the BSR triggered due to the *RRCConnectionRequest* message because there is no remaining data in UL buffer. Unlike the legacy RRC connection establishment procedure, if the UE is using the CP solution and/or the UP solution, the MAC may not cancel BSR, even when a CCCH SDU including *RRCConnecitonResumeRequest* is transmitted, because there are remaining data (e.g. data stored in PDCP/RLC/RRC) to be transmitted via SRB1.

Upon reception of *RRCConnecitonResume* message, the UE restores AS configuration, reconfigures MAC and establishes PDCP/RLC accordingly.

In MAC layer, especially for NB-IoT, the Data Volume and Power Headroom (DV-PH) reporting procedure is introduced. A DV-PH MAC CE is sent via Msg3 including a CCCH SDU in order to inform the amount of data of a radio bearer which is suspended or not yet established. When Msg3 including the CCCH SDU is to be sent, the UE generates a DV-PH MAC CE and a BSR MAC CE. For example, if RRC initiates RRC Connection Resume procedure, both BSR and DV-PH are triggered by the *RRCConnectionResumerequest* message.

Both DV-PH MAC CE and BSR MAC CE report the amount of data of the logical channel which is resumed. It would be redundant and waste of resource to send both the DV-PH MAC CE and the BSR MAC CE in Msg3. Therefore, a new mechanism is required which can avoid redundant BSR transmission in Msg3.

A UL grant indicated by a RAR may not be large enough to accommodate all the CCCH SDU, the BSR MAC CE and the DV-PH MAC CE. In this case, it is unclear which MAC CE is to be included in a MAC PDU containing Msg3 using the UL grant. According to the current logical channel prioritization (LCP) procedure, the MAC entity shall take into account the following relative priority in decreasing order:
- MAC control element for C-RNTI or data from UL-CCCH;
- MAC control element for SPS confirmation;
- MAC control element for BSR, with exception of BSR included for padding;
- MAC control element for PHR, Extended PHR, or Dual Connectivity PHR;
- MAC control element for Sidelink BSR, with exception of Sidelink BSR included for padding;
- data from any Logical Channel, except data from UL-CCCH;
- MAC control element for BSR included for padding;
- MAC control element for Sidelink BSR included for padding.

The priority of DV-PH MAC CE in the current LCP procedure is not defined. Therefore, it is unclear whether the DV-PH MAC CE has higher priority than that of the BSR MAC CE.

The present invention proposes that a UE transmits a DV-PH report and no BSR in Msg3 when an RRC message is to be sent on a CCCH. Hereinafter, detailed examples applying the present invention to the RRC connection establishment procedure are described. In the following description, it is assumed that a MAC entity triggers both of DV-PH and BSR when there is an RRC message to be sent on a CCCH (by the UE in RRC_IDLE state). A MAC entity triggers DV-PH when DV-PH MAC CE needs to be sent as specified in 3GPP TS 36.321. For example, in NB-IoT, a MAC entity includes a DV-PH MAC CE in a MAC PDU when a CCCH SDU is to be sent. A MAC entity triggers BSR according to the BSR trigger condition as mentioned at the description of FIG. 6. More detailed conditions triggering a DV-PH report and a BSR can refer to 3GPP TS 36.321. The MAC entity considers that a DV-PH report is pending if the DV-PH report has been triggered and not cancelled. The MAC entity considers that a BSR is pending if the BSR has been triggered and not cancelled.

### <Invention 1. A MAC entity cancels BSR if DV-PH report is pending.>

If a MAC entity has at least one pending BSR, the MAC entity cancels all BSR when one of the following events occurs:
- There is pending DV-PH report, e.g., DV-PH report has been triggered;
- DV-PH reporting procedure is triggered, i.e., a DV-PH report is triggered;
- DV-PH MAC CE is generated;
- DV-PH MAC CE is accommodated in a MAC PDU; or
- DV-PH MAC CE is sent over Msg3 together with CCCH SDU.

When one of the following events occurs, the MAC entity cancels the BSR even if there is remaining data for a radio bearer in NAS layer, RRC layer, PDCP layer, or RLC layer, wherein the radio bearer is:
- a suspended radio bearer;
- a radio bearer to be resumed;
- a radio bearer not yet established; and/or
- any radio bearer other than an established radio bearer. The established radio bearer is SRB0, for example.

If the MAC entity cancels the triggered BSR, the MAC entity shall not transmit a BSR MAC CE even if the MAC entity has generated the BSR MAC CE.

For example, if the MAC entity triggers a BSR while the MAC entity has a pending DV-PH report, the MAC entity cancels the triggered BSR immediately.

For example, if the MAC entity triggers a DV-PH report while the MAC entity has a pending BSR, the MAC entity cancels the triggered BSR immediately.

Proposal 1 may be applied as the following example:
- The RRC layer transmits an *RRCConnectionResumeRequest* message to a lower layer (e.g. RLC layer, PDCP layer) of SRB0. The MAC entity triggers a BSR. The RRC connection resume procedure may be initiated by the RRC layer if the NAS layer, RRC layer, PDCP layer, and/or RLC layer has data to be transmitted.;
- The RRC layer receives data to be transmitted over a suspended radio bearer (before and/or after initiation of the RRC connection resume procedure). A scheduling request (SR) is triggered by the BSR. There are no UL-SCH resources available for a transmission in each TTI and no valid PUCCH resource for SR configured in any TTI, since the RRC connection of the UE has been suspended. Accordingly, the MAC entity initiates a random access procedure if an SR is triggered (due to the BSR) by the MAC entity.;
- The MAC entity receives an UL grant via a random access response (RAR) of the random access procedure.;
- The MAC entity generates a MAC PDU to be transmitted on the received UL grant, i.e., Msg3. The MAC entity triggers a DV-PH report. The MAC entity cancels all triggered BSR. The MAC entity includes a DV-PH MAC CE and a CCCH SDU containing the *RRCConnectionResumeRequest* message in a MAC PDU to be transmitted on the received UL grant. The MAC entity does not include a BSR MAC CE in the MAC PDU.;
- The MAC entity transmits the generated MAC PDU.

According to Proposal 1, a BSR is triggered when an *RRCConnectionResumeRequest* message is to be sent on a CCCH, but canceled since the DV-PH report is to be transmitted with the CCCH.

### <Proposal 2. A MAC entity does not transmit BSR in a MAC PDU if MAC entity transmits a DV-PH report in the MAC PDU.>

In this Proposal 2, if the MAC entity has both of pending BSR and pending DV-PH report, the MAC entity transmits only a DV-PH MAC CE in a MAC PDU (e.g. a MAC PDU to be transmitted as Msg3). In other words, the MAC entity shall not transmit a BSR MAC CE in the MAC PDU which contains the DV-PH MAC CE.

When the MAC entity transmits the DV-PH MAC CE in a MAC PDU, the MAC entity additionally includes a CCCH SDU in the same MAC PDU. The MAC entity shall not include the BSR MAC CE in the MAC PDU if the MAC entity includes a CCCH SDU in the MAC PDU. When the MAC entity transmits the DV-PH MAC CE in the MAC PDU, the MAC entity may not cancel the triggered BSR but the MAC entity shall not transmit the BSR MAC CE in the MAC PDU. The MAC entity does not transmit the BSR MAC CE in a MAC PDU containing a DV-PH MAC CE even if the UL grant large enough to accommodate the BSR MAC CE together with DV-PH MAC CE.

Proposal 2 may be applied as the following example:
- The RRC layer transmits an *RRCConnectionResumeRequest* message to a lower layer (e.g. RLC layer, PDCP layer) of SRB0. The MAC entity triggers a BSR. The RRC connection resume procedure may be initiated by the RRC layer if the NAS layer, RRC layer, PDCP layer, and/or RLC layer has data to be transmitted.;
- The RRC layer receives data to be transmitted over a suspended radio bearer (before and/or after initiation of the RRC connection resume procedure). A scheduling request (SR) is triggered by the BSR. The MAC entity triggers an SR, and initiates a random access procedure.;
- The MAC entity receives an UL grant via an RAR of the random access procedure.;
- The MAC entity generates a MAC PDU to be transmitted on the received UL grant, i.e., Msg3. The MAC entity triggers a DV-PH report. The MAC entity includes a DV-PH MAC CE and a CCCH SDU containing the *RRCConnectionResumeRequest* message in a MAC PDU to be transmitted using the received UL grant. The MAC entity does not include a BSR MAC CE in the MAC PDU.
- The MAC entity transmits the generated MAC PDU.

According to Proposal 1, a BSR is triggered when there is an *RRCConnectionResumeRequest* message to be sent on a CCCH, and the triggered BSR is not canceled even if a DV-PH report is pending. If there is a pending DV-PH report to be transmitted in a MAC PDU, a BSR MAC CE is not included in the MAC PDU even if the triggered BSR is not canceled.

In both Proposal 1 and Proposal 2, a triggered BSR is not included in a MAC PDU of Msg3 if there is a DV-PH report to be transmitted in Msg3.

### <Proposal 3. An RRC layer does not transmit data to a lower layer until when a UE enters RRC_CONNECTED.>

In Proposal 3, an RRC layer of a UE does not transmit data to a lower layer (e.g. RLC and/or PDCP) until the UE enters RRC_CONNECTED, where the data refers to user plane data to be transmitted in Msg5 over a radio bearer. The radio bearer is:
- a suspended radio bearer;
- a radio bearer to be resumed;
- not yet established bearer; and/or
- any radio bearer other than an established radio bearer. The established radio bearer is SRB0, for example.

The UE enters RRC_CONNECTED when the UE receives an *RRCConnectionSetup* or *RRCConnectionResume* message from an eNB.

A BSR is triggered considering data stored in PDCP and RLC entities, whereas a DV-PH report is triggered considering data stored in PDCP, RLC and RRC. Accordingly, if the RRC layer does not transmit (user plane) data to the lower layer (e.g., PDCP layer) and stores the (user plane) data in the RRC layer, the MAC entity does not trigger a BSR associated with the (user plane) data and does not transmit a BSR MAC CE associated with the (user plane) data, while the MAC entity triggers a DV-PH report and transmits the DV-PH MAC CE in Msg3.

Proposal 3 may be applied as the following example:
- The RRC layer transmits an *RRCConnectionResumeRequest* message to a lower layer of SRB0. The MAC entity triggers a BSR, where the BSR is triggered due to the *RRCConnectionResumeRequest.* The RRC layer receives data to be transmitted over a suspended radio bearer. The data to be transmitted over the suspended radio bearer is maintained at the RRC layer and not submitted to the lower layer. Accordingly, a BSR due to the data is not triggered. Since there is the BSR triggered due to the *RRCConnectionResumeRequest,* the MAC entity triggers an SR and initiates a random access procedure.;
- The MAC entity receives an UL grant via RAR of the random access procedure.;
- The MAC entity generates a MAC PDU to be transmitted on the received UL grant, i.e., Msg3. The MAC entity triggers a DV-PH report since the RRC layer has the data to be transmitted over a suspended radio bearer. The MAC entity includes a DV-PH MAC CE and a CCCH SDU containing the *RRCConnectionResumeRequest* message, in a MAC PDU to be transmitted using the received UL grant. The MAC entity cancels the triggered BSR.;
- The MAC entity transmits the generated MAC PDU.
- The RRC layer receives an *RRCConnectionSetup* message or an *RRCConnectionResume message* from an eNB, and enters RRC_CONNECTED state.;
- The RRC layer transmits the data to the lower layer of the suspended radio bearer.

According to Proposal 1 and Proposal 2, a BSR is triggered if there is an RRC connection request or RRC connection resume request to be transmitted on a CCCH. Unlike Proposal 1 and Proposal 2, Proposal 3 prevents a BSR from being triggered when there is the RRC connection request or RRC connection resume request to be transmitted on a CCCH.

FIG. 9 is a block diagram illustrating elements of a transmitting device 100 and a receiving device 200 for implementing the present invention.

The transmitting device 100 and the receiving device 200 respectively include Radio Frequency (RF) units 13 and 23 capable of transmitting and receiving radio signals carrying information, data, signals, and/or messages, memories 12 and 22 for storing information related to communication in a wireless communication system, and processors 11 and 21 operationally connected to elements such as the RF units 13 and 23 and the memories 12 and 22 to control the elements and configured to control the memories 12 and 22 and/or the RF units 13 and 23 so that a corresponding device may perform at least one of the above-described embodiments of the present invention.

The memories 12 and 22 may store programs for processing and controlling the processors 11 and 21 and may temporarily store input/output information. The memories 12 and 22 may be used as buffers.

The processors 11 and 21 generally control the overall operation of various modules in the transmitting device and the receiving device. Especially, the processors 11 and 21 may perform various control functions to implement the present invention. The processors 11 and 21 may be referred to as controllers, microcontrollers, microprocessors, or microcomputers. The processors 11 and 21 may be implemented by hardware, firmware, software, or a combination thereof. In a hardware configuration, application specific integrated circuits (ASICs), digital signal processors (DSPs), digital signal processing devices (DSPDs), programmable logic devices (PLDs), or field programmable gate arrays (FPGAs) may be included in the processors 11 and 21. Meanwhile, if the present invention is implemented using firmware or software, the firmware or software may be configured to include modules, procedures, functions, etc. performing the functions or operations of the present invention. Firmware or software configured to perform the present invention may be included in the processors 11 and 21 or stored in the memories 12 and 22 so as to be driven by the processors 11 and 21.

The processor 11 of the transmitting device 100 performs predetermined coding and modulation for a signal and/or data scheduled to be transmitted to the outside by the processor 11 or a scheduler connected with the processor 11, and then transfers the coded and modulated data to the RF unit 13. For example, the processor 11 converts a data stream to be transmitted into *K* layers through demultiplexing, channel coding, scrambling, and modulation. The coded data stream is also referred to as a codeword and is equivalent to a transport block which is a data block provided by a MAC layer. One transport block (TB) is coded into one codeword and each codeword is transmitted to the receiving device in the form of one or more layers. For frequency up-conversion, the RF unit 13 may include an oscillator. The RF unit 13 may include *Nₜ* (where *N*ₜ is a positive integer) transmit antennas.

A signal processing process of the receiving device 200 is the reverse of the signal processing process of the transmitting device 100. Under control of the processor 21, the RF unit 23 of the receiving device 200 receives radio signals transmitted by the transmitting device 100. The RF unit 23 may include *N*ᵣ (where *N*ᵣ is a positive integer) receive antennas and frequency down-converts each signal received through receive antennas into a baseband signal. The processor 21 decodes and demodulates the radio signals received through the receive antennas and restores data that the transmitting device 100 intended to transmit.

The RF units 13 and 23 include one or more antennas. An antenna performs a function for transmitting signals processed by the RF units 13 and 23 to the exterior or receiving radio signals from the exterior to transfer the radio signals to the RF units 13 and 23. The antenna may also be called an antenna port. Each antenna may correspond to one physical antenna or may be configured by a combination of more than one physical antenna element. The signal transmitted from each antenna cannot be further deconstructed by the receiving device 200. An RS transmitted through a corresponding antenna defines an antenna from the view point of the receiving device 200 and enables the receiving device 200 to derive channel estimation for the antenna, irrespective of whether the channel represents a single radio channel from one physical antenna or a composite channel from a plurality of physical antenna elements including the antenna. That is, an antenna is defined such that a channel carrying a symbol of the antenna can be obtained from a channel carrying another symbol of the same antenna. An RF unit supporting a MIMO function of transmitting and receiving data using a plurality of antennas may be connected to two or more antennas.

In the embodiments of the present invention, a UE operates as the transmitting device 100 in UL and as the receiving device 200 in DL. In the embodiments of the present invention, an eNB operates as the receiving device 200 in UL and as the transmitting device 100 in DL. Hereinafter, a processor, an RF unit, and a memory included in the UE will be referred to as a UE processor, a UE RF unit, and a UE memory, respectively, and a processor, an RF unit, and a memory included in the eNB will be referred to as an eNB processor, an eNB RF unit, and an eNB memory, respectively.

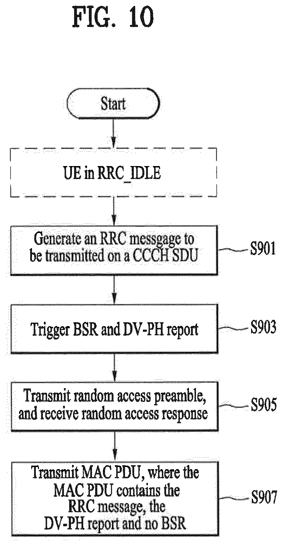

FIG. 10 illustrates a method for informing a network of the amount of data available for uplink transmission according to the present invention. Especially, FIG. 10 shows a method according to Proposal 1 and Proposal 2.

Referring to FIG. 9 and FIG. 10, when there is a RRC message to be sent on a CCCH (S901), a UE processor of a UE may trigger a BSR and a DV-PH report (S903). The RRC message may be a message to be transmitted in a Msg3 containing a C-RNTI MAC CE or CCCH SDU, as part of a random access procedure. For example, an RRC connection resume request message or a RRC connection request message can be the RRC message to be sent on a CCCH. The UE processor may control a UE RF unit to transmit the RRC connection resume request message or the RRC connection request message when the UE needs to transit from RRC_IDLE state to RRC_CONNECTED state.

For transmission of data stored at a UE memory (e.g., UL buffers), the UE processor may initiate the random access procedure. The UE processor controls the UE RF unit to transmit a random access preamble, and monitors a random access response (RAR) after transmission of the random access preamble (S905). In other words, the UE processor controls the UE RF unit to transmit a random access preamble, and controls the UE RF unit to receive the RAR corresponding to the random access preamble (S905). A UL grant is provided by the RAR to the UE.

The UE processor generates a MAC PDU containing the RRC message. In other words, the UE processor generates a MAC PDU containing a CCCH SDU of the RRC message. According to the present invention, the UE processor generates the MAC PDU to include a DV-PH MAC CE containing the DV-PH report. The UE processor generates the MAC PDUU to include no BSR. The UE processor controls the UE RF unit to transmit the MAC PDU using the UL grant (S907).

According to the present invention, if the UL grant for transmission of Msg3 is not sufficient to accommodate the CCCH SDU (containing an RRC message to be transmitted in Msg3), the BSR MAC CE and the DV-PH MAC CE, a MAC PDU is generated to include the CCCH SDU and DV-PH MAC CE and not to include the BSR MAC CE. In other words, for LCP procedure, the MAC entity assumes that the DV-PH MAC CE has higher priority than that of the BSR MAC CE.

According to the present invention, a MAC PDU to be transmitted in Msg3 is generated to include a CCCH SDU (containing the RRC connection request or RRC connection resume message) and DV-PH MAC CE but no BSR MAC CE, even if the UL grant for transmission of Msg3 is sufficient to accommodate the CCCH SDU, the BSR MAC CE and the DV-PH MAC CE.

As described above, the detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the spirit or scope of the invention described in the appended claims. Accordingly, the invention should not be limited to the specific embodiments described herein, but should be accorded the broadest scope consistent with the principles and novel features disclosed herein.

### [Industrial Applicability]

The embodiments of the present invention are applicable to a network node (e.g., BS), a UE, or other devices in a wireless communication system.

## Claims

1. A method for transmitting, by a user equipment, data volume information, the method comprising:
transmitting a random access preamble;
receiving a random access response containing an uplink grant in response to the random access preamble; and
transmitting a medium access control (MAC) protocol data unit (PDU) including a radio resource control (RRC) message using the uplink grant,
wherein the MAC PDU includes a data volume and power headroom (DV-PH) report and no buffer status report (BSR), and
wherein the DV-PH report is used to inform the amount of data for a radio bearer which is suspended or not yet established.

2. The method according to claim 1,
wherein the random access preamble is transmitted when there is an RRC message to be sent on a common control channel (CCCH).

3. The method according to claim 1 or 2, further comprising:
triggering a BSR when there is an RRC message to be sent on a CCCH; and
canceling the triggered BSR when the DV-PH report is included in the MAC PDU.

4. The method according to any one of claims 1 to 3,
wherein the RRC message is an RRC connection resume request message.

5. The method according to any one of claims 1 to 4,
wherein the RRC message is transmitted through a signaling radio bearer 0 (SRB0).

6. The method according to any one of claims 1 to 5,
wherein the RRC message is contained in a CCCH service data unit (SDU) included in the MAC PDU.

7. The method according to any one of claims 1 to 6,
wherein the user equipment is a narrowband internet of things (NB-IoT) user equipment.

8. A user equipment for transmitting data volume information, the user equipment comprising:
a radio frequency (RF) unit, and
a processor configured to control the RF unit, the processor that:
controls the RF unit to transmit a random access preamble;
controls the RF unit to receive a random access response containing an uplink grant in response to the random access preamble; and
control the RF unit to transmit a medium access control (MAC) protocol data unit (PDU) including a radio resource control (RRC) message using the uplink grant,
wherein the MAC PDU includes a data volume and power headroom (DV-PH) report and no buffer status report (BSR), and
wherein the DV-PH report is used to inform the amount of data for a radio bearer which is suspended or not yet established.

9. The user equipment according to claim 8,
wherein the processor controls the RF unit to transmit the random access preamble is transmitted when there is an RRC message to be sent on a common control channel (CCCH).

10. The user equipment according to claim 8 or 9,
wherein the processor triggers a BSR when there is an RRC message to be sent on a CCCH, and cancels the triggered BSR when the DV-PH report is included in the MAC PDU.

11. The user equipment according to any one of claims 8 to 10,
wherein the RRC message is an RRC connection resume request message.

12. The user equipment according to any one of claims 8 to 11,
wherein the RRC message is transmitted through a signaling radio bearer 0 (SRB0).

13. The user equipment according to any one of claims 8 to 12
wherein the RRC message is contained in a CCCH service data unit (SDU) included in the MAC PDU.

14. The user equipment according to any one of claims 8 to 13,
wherein the DV-PH report includes information identifying the total amount of data available across all logical channels and of data yet associated with a logical channel after all MAC PDUs for a transmission time interval (TTI) have been established.

15. The user equipment according to any one of claims 8 to 14,
wherein the user equipment is a narrowband internet of things (NB-IoT) user equipment.
